# EUROPEAN PATENT APPLICATION

(11) **EP 3 038 017 A1**
(43) Date of publication of application: **29.06.2016**
(21) Application number: 14307167.8
(22) Date of filing: 23.12.2014
(51) Int. Cl.: G06K 9/46

(54) **Method of generating descriptor for interest point in image and apparatus implementing the same**

(71) Applicant: Thomson Licensing, 92130 Issy-les-Moulineaux (FR)
(72) Inventor: Lefebvre, Frédéric, 35576 Cesson-Sévigné (FR); Demoulin, Vincent, 35576 Cesson-Sévigné (FR)
(74) Representative: Huchet, Anne

(57) **Abstract**

A method of generating a descriptor includes determining, in an image, a circular region having a center at an interest point to be described; extracting strips extending in the circular region in mutually different directions and intersecting together at the interest point; dividing each of the strips into patches; characterizing each of the patches using Haar features to acquire elements of the descriptor corresponding to the respective Haar features; and reordering the elements of the descriptor according to the strip corresponding to a maximum local.

## Description

### FIELD

The present disclosure generally relates to a method of generating a descriptor for an interest point in an image and an apparatus implementing the same.

### BACKGROUND

United States Publication No. 2012/0343654 A1 (Reference No. 1) and "ALOHA: An Efficient Binary Descriptor Based on Haar Features", Sajib Saha and Vincent Demoulin, Conf. ICIP 2012 (Reference No. 2) disclose a general background on feature descriptors in computer vision.

In a technical field of content based image retrieval, an image description process is based on 3 main components:
1) Keypoint/region detection: This block finds blob regions, corners and key points.
2) Keypoint/region description: This block describes the local regions/keypoints detected in the first Step.
3) Global descriptor aggregation: This block aggregates all the previous keypoint descriptions in a single global description.

An embodiment of the present disclosure generally relates to the second item of the list, i.e., description of image local features.

Many descriptors have been proposed in the past two decades. They are usually evaluated by:
- robustness (or invariance) to geometric and photometric changes and to any kind of noise that can disturb the image
- the discriminative power: two different local features will be described by two descriptors easy to distinguish
- the computational complexity that is measured by the number of operations required to compute the descriptor associated to a given feature
- the compacity equivalent to the size of the memory footprint that is measured by the number of bits or bytes needed to describe a given feature

Among the existing descriptors, the SIFT one, proposed by Lowe, is very popular due to good performance. However, it exhibits a high computational complexity because it requires the computation of a histogram of gradients and it describes a feature using 128 bytes which is not as compact as one could expect. Several derived versions of SIFT have been proposed to reduce the memory pattern (PCA-SIFT, ...) but for all of them, the computational complexity is increased.

Later, the SURF descriptor has been proposed as a simplification of SIFT in terms of computational complexity and memory pattern but with losses in terms of robustness to geometrical changes. The same kind of dimensional reduction have been applied on the SURF descriptor leading to the same losses as the ones observed on SIFT.

More recently, new compact descriptors built as a list of bits instead of bytes have been proposed. LBP can be seen as the forerunner of which BRIEF, rBRIEF and BRISK are all successors. All of them exhibit a low computational complexity but are not as robust as SIFT, especially for geometric changes.

### SUMMARY

According to one aspect of the present disclosure, a method of generating a descriptor includes determining, in an image, a circular region having a center at an interest point to be described; extracting strips extending in the circular region in mutually different directions and intersecting together at the interest point; dividing each of the strips into patches; characterizing each of the patches using Haar features to acquire elements of the descriptor corresponding to the respective Haar features; and reordering the elements of the descriptor according to the strip corresponding to a maximum local.

According to another aspect of the present disclosure, an apparatus for generating a descriptor includes a processor that is adapted to execute stored instructions; and a memory that stores instructions, the memory storing processor executable code that, when executed by the processor, is adapted to determine, in an image, a circular region having a center at an interest point to be described; extract strips extending in the circular region in mutually different directions and intersecting together at the interest point; divide each of the strips into patches; characterize each of the patches using Haar features to acquire elements of the descriptor corresponding to the respective Haar features; and arrange the elements of the descriptor according to the strip corresponding to a maximum local.

According to further another aspect of the present disclosure, a computer program product includes program code instructions causing a processor to perform at least the steps of the method of generating a descriptor according to the embodiment when the instructions are executed by the processor.

According to yet another aspect of the present disclosure, a processor readable medium stores therein instructions causing a processor to perform at least the steps of the method of generating the descriptor according to the embodiment when the instructions are executed by the processor.

Other objects, features and advantages of the technique according to the present disclosure will become more apparent from the following detailed description when read in conjunction with the accompanying drawings.

### BRIEF DESCRIPTION OF THE DRAWINGS

FIG. 1 illustrates a method of generating a descriptor according to the present embodiment;
FIG. 2 is a flowchart illustrating a method of generating a descriptor according to the present embodiment;
FIG. 3 is a flowchart illustrating details of Step S400 of FIG. 2 in one example;
FIG. 4 is a flowchart illustrating details of Step S400 of FIG. 2 in another example;
FIG. 5 is a flowchart illustrating details of Step S500 of FIG. 2 in one example;
FIG. 6 is a flowchart illustrating details of Step S500 of FIG. 2 in another example; and
FIG. 7 illustrates one example of a hardware configuration of a computer system for implementing a method of generating a descriptor according to the present embodiment.

### DESCRIPTION OF EMBODIMENT

The preferred embodiment according to the present disclosure will be described with reference to the accompanying drawings.

In References Nos. 1 and 2, a new descriptor has been proposed called an Aggregated LOcal HAar (ALOHA) descriptor, based on Haar features in a fixed square tile partitioning. Low computational complexity is reached using "integral image" computation.

This new descriptor is more discriminative than the existing ones but, as those, it is not robust to geometric changes. The patch/region to describe has to be normalized in scale and regarding the principal orientation to be robust against geometrical distortion.

According to the present embodiment, a method is provided to describe a picture (image) using Haar features on a radial strip.

The usage of a strip is common to the technique generating a Radon Soft Hash Algorithm (RASH) descriptor. It allows robustness against rotation due to reordering of the elements/bits according to the main orientation.

The usage of Haar features is common to the technique of generating the ALOHA descriptor. It allows a fast multiscale approach of the descriptor, robust features extraction and is compliant with a SURF detector (see "Speeded-Up Robust Features (SURF)", Herbert Bay, Andreas Ess, Tinne Tuytelaars and Luc Van Gool).

The present embodiment concerns a method and a system for describing a picture (image) or a region in a picture (image). The present embodiment is based on benefits of both the RASH descriptor (see "Message digests for photographic images and video contents", Frederic Lefebvre, Presses universitaires de Louvain, 2004, ISBN 2-930344-58-X (Reference No. 3)) and the ALOHA descriptor (see References Nos. 1 and 2).

A technical problem to be solved by the present embodiment is how to build a discriminative and robust - against geometrical distortion - local feature binary descriptor that exhibits a low computational complexity and a compact memory pattern.

Advantages of such a descriptor are discriminative power as in the ALOHA descriptor and robustness to geometric distortion (rotation) by using strip partitioning as in the RASH descriptor.

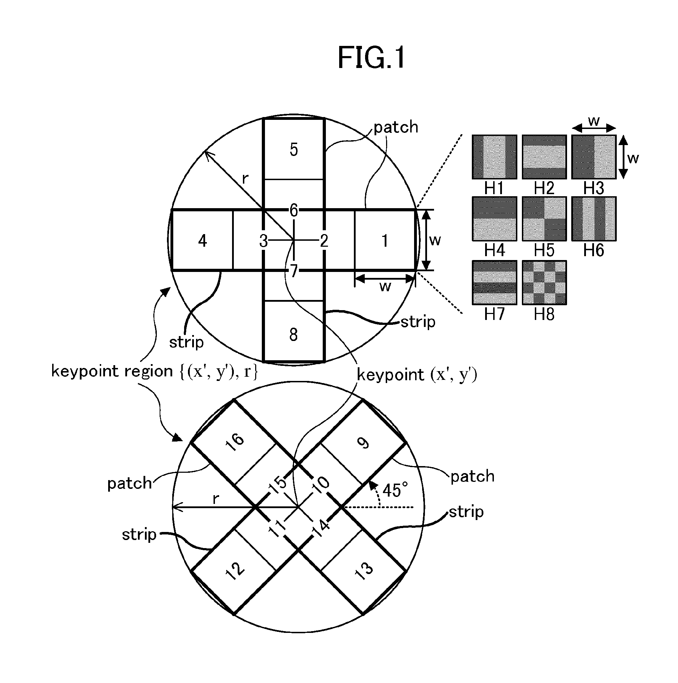

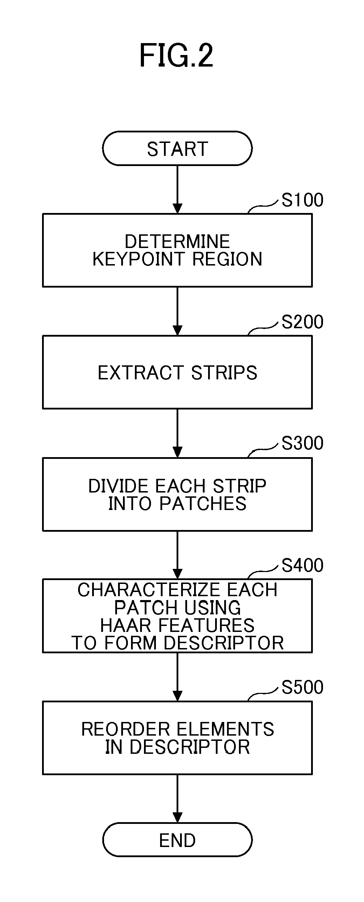

If the number Ns of strips (as will be described later using FIG. 1, for example) is limited to, for example, 4, the computational complexity is very limited because such a known image processing technique as the main "integral image" and the shifted one (see "An extended set of Haar-like features for rapid object detection", R.Lienhard and J.Maydt, Conf. ICIP 2002) can be used to simplify the computation of the mean intensities using the Haar features (in Step S400 in FIG. 2 which will be described later, for example).

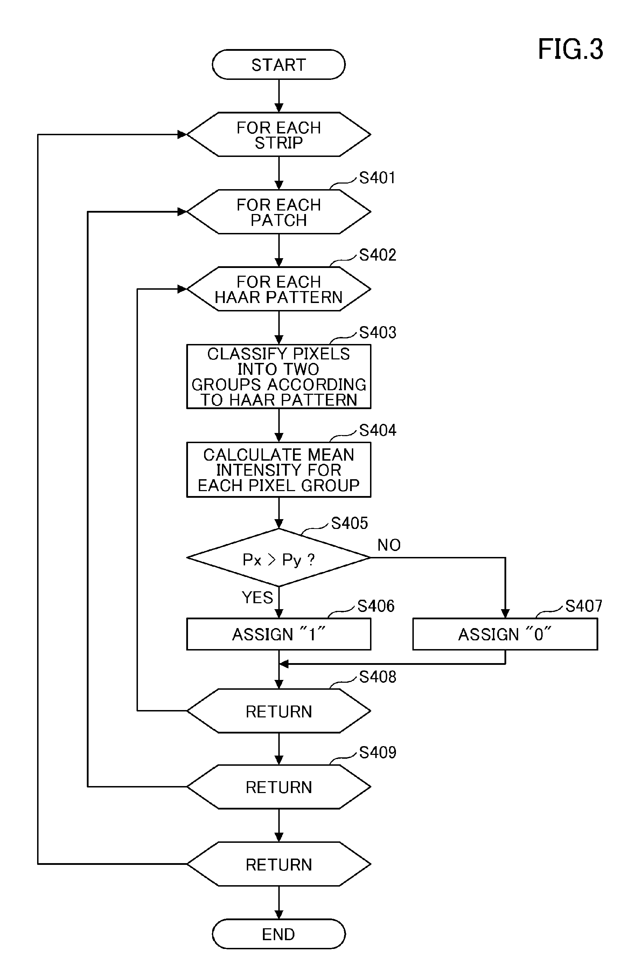

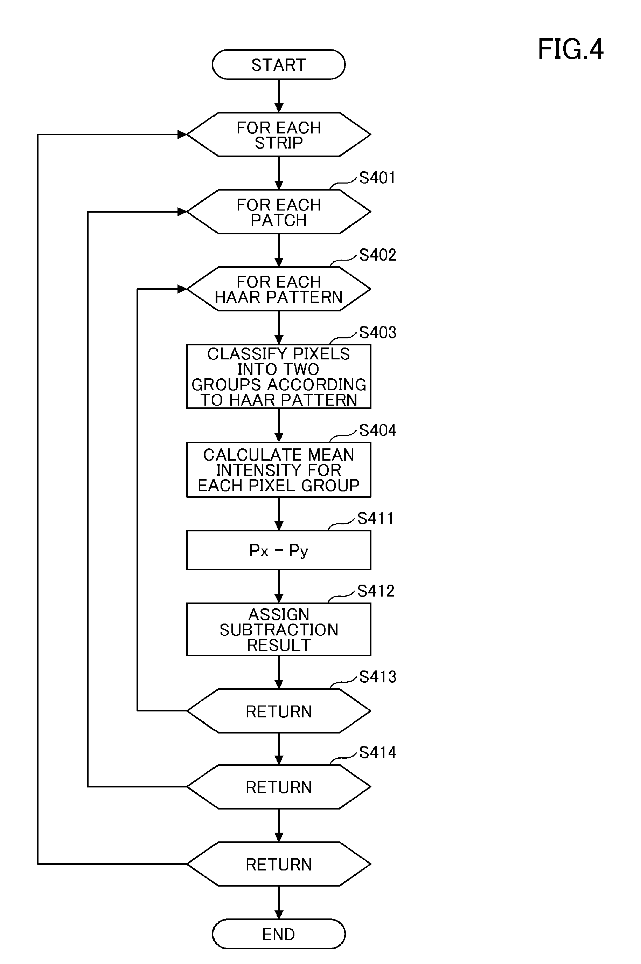

The image processing technique "integral image" is a very well-known method used to speed up the computation of the sum of all the pixel contained within a rectangular area. Computation of bits from horizontal and vertical strips can be done with the main (or classical) "integral image" technique. For inclined (or rotated) strips, the shifted "integral image" technique can be used (see Reference No. 1, for example, especially, Figures 3(d) and 4 for calculating the pixel sum of a rotated rectangle).

This descriptor can also be used to describe a full image. In this case, the keypoint (interest point) is set to the image center and the main circular patch (i.e., the keypoint region in the example of FIG. 1) is the circle limited to the image size.

The present embodiment builds on the technique of generating the RASH descriptor disclosed in Reference No. 3. The RASH descriptor is a fast image descriptor, rotation invariant due to the strip description but that suffers from discriminative power in case of a large scale due to the fact that only 1 feature (variance) is extracted from a strip, and the strip width is not large enough.

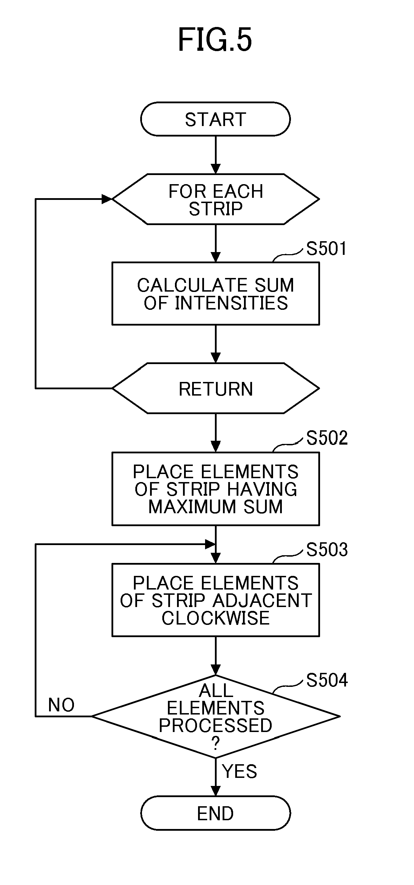

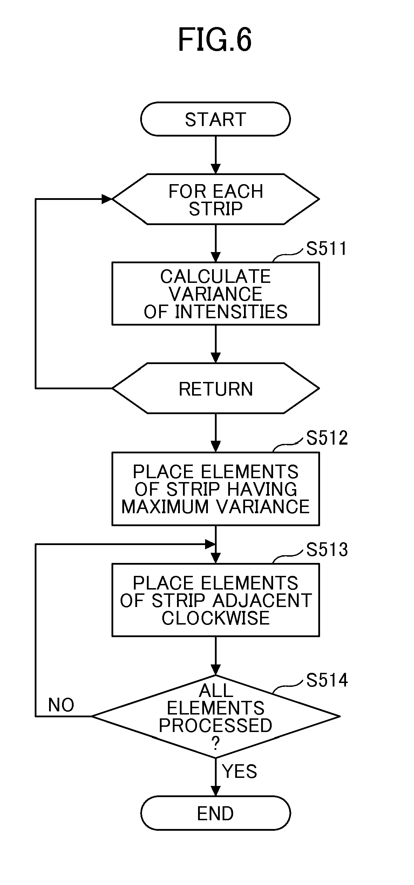

The present embodiment is a method that allows building a binary string or a floating vector describing a local feature of an image from a set of patterns reminiscent of Haar like features applied in different patches along strips. Strips are included in a circular main patch around the keypoint (interest point) to describe. Each strip is divided into rectangular patches and each patch is characterized by using a set of Haar features (in the example of FIG. 1, those H1, H2, H3, H4, H5, H6, H7 and H8). The descriptor is a concatenation of the characterized results thus acquired for each patch of each strip. The binary version of the descriptor is computed by, for example, keeping only the signs of the characterized results (as will be described later). The descriptor is normalized by reordering the elements according to the strip that corresponds to the maximum local (in Step S500 of FIG. 2, for example). The strip that corresponds to the maximum local means, for example, the strip that has the maximum sum or variance of the intensities in the strip, as will be described using FIGs. 5 and 6, or so.

When an image is rotated, the strip included in the image corresponding to the maximum local is rotated in the same way accordingly. Therefore, by detecting the strip corresponding to the maximum local and arranging the elements of the descriptor according to the thus detected strip (as will be described using FIGs. 5 and 6, for example), the same descriptor is generated even after the rotation of the image. That is, when the image is rotated, the elements,/bits of the descriptor are shifted according to the main orientation (i.e., the orientation of the strip corresponding to the maximum local). Thus, a descriptor generated by the method according to the present embodiment is robust against image rotation.

The method according to the present embodiment includes, for example, the following steps (see FIGs. 1-6):
As shown in FIG. 1, a circular "keypoint region" of a radius r centered at a detected keypoint (x', y') (interest point) that describes a given image is determined (Step S100 in FIG. 2).

From this keypoint region, Ns (that is a positive integer) strips of a width w are extracted (Step S200).

In the example of FIG. 1, the Ns (i.e., four) strips includes, as shown in FIG. 1, the strip (including the patches numbered 1, 2, 3 and 4) that horizontally extends from right to left; the strip (including the patches numbered 5, 6, 7 and 8) that vertically extends from top to bottom; the strip (including the patches numbered 9, 10, 11 and 12) that extends obliquely at an angle of 45° from top right to bottom left; and the strip (including the patches numbered 13, 14, 15 and 16) that extends obliquely at an angle of 45° from bottom right to top left. Thus, the respective strips extend in different directions shifted every 45°.

Also, as shown in FIG. 1, each of the four strips extends to be inscribed in the circular edge of the keypoint region.

Also, as shown in FIG. 1, all of the four strips intersect together at the keypoint (x', y') (interest point) that is the center of the keypoint region.

Further, as shown, the four strips intersect together at the respective boundaries between their second and third patches (i.e., the boundary between "2" and "3" patches, the boundary between "6" and "7" patches, the boundary between "10" and "11" patches and the boundary between "14" and "15" patches).

Each strip ("strip" in FIG. 1) is divided into Np (that is a positive integer) rectangular patches of width w (Step S300).

Each patch ("patch" in FIG. 1) is characterized by Nh (that is a positive integer) Haar features (Step S400).

The descriptor, a vector of a dimension D (= Ns x Np x Nh), is a concatenation of the results of thus characterizing each patch of each strip using the Nh Haar features. Only the sign of each characterized result is kept to build a binary descriptor, for example (described later with FIG. 3).

Note that a primary order of the total of D (= Ns x Np x Nh) elements in the descriptor is, for example, previously determined. In the example of FIG. 1, the primary order of the elements in the descriptor are those according to the numbers of the respective patches shown in FIG. 1 and the order of the Haar features of H1, H2, H3, H4, H5, H6, H7 and H8 shown in FIG. 1. That is, the element acquired by using the "H1" Haar feature for the rightmost patch in the horizontal strip numbered 1 is the first element of the descriptor and the element acquired by using the "H8" Haar feature for the top left patch in the oblique strip numbered 16 is the last element of the descriptor having the total of 128 elements. The thus acquired primary order of the elements/bits is changed in Step S500 of normalizing.

In Step S500, the strip that corresponds to the maximum local is found from among the Ns strips. The strip that corresponds to the maximum local can be determined, for instance, by determining which one of the strips has the maximum sum or variance of the intensities of the pixels included in the strip.

The descriptor is then normalized by reordering the elements according to the strip that corresponds to the maximum local (Step S500). This process will be described in more detail using FIGs. 5-6.

In the example of FIG. 1, the number Ns of strips is 4, the number Np of patches per strip is 4 and the number Nh of the Haar features is 8. This means that the dimension D of the descriptor is 4x4x8 = 128. In other words, the descriptor includes 128 elements, as mentioned above. The 8 Haar features shown in FIG. 1 are an example and any other Haar features can be used instead. Among the total 16 patches (numbered 1, 2, 3, ... and 16 in FIG. 1), the patches 9-16 are inclined by 45°. For the inclined patches in the inclined strips, the above-mentioned shifted "integral image" technique can be advantageously used to calculate the sums of the intensities of pixels in the patches/strips in Steps S400 and S500 in FIG. 2.

FIG. 3 illustrates one example of Step S400 in FIG. 2.

As shown in FIG. 3, for each of the Ns strips extracted in Step S200, Steps S401-S409 are executed.

In this regard, in the example of FIG. 1, the strips are processed in the order of the numbers of the patches shown in FIG. 1. That is, first, the horizontal strip having the "1", "2", "3" and "4" patches is processed, and the oblique strip having the "13", "14", "15" and "16" patches is processed at the end.

In Step S401, for each of the Np patches included in the strip, Steps S402-S408 are executed.

In this regard, in the example of FIG. 1, the patches per strip are processed in the order of the numbers of the patches shown in FIG. 1. For example, when the vertical strip having the "5", "6", "7" and "8" patches is processed, the "5" patch is processed first and the "8" patch is processed at the end.

In Step S402, using each of the Nh Haar patterns (Haar features), Steps S403-S407 are executed.

In Step S403, the pixels included in the patch are classified into a pixel group X and a pixel group Y according to the Haar pattern. Each Haar pattern has the same size as the patch and is partitioned in two parts having equal areas with two different grey levels, the darker one and the lighter one. For example, the pixels in the patch at the positions corresponding to the darker part in the Haar feature are classified into the pixel group X and the pixels in the patch at the positions corresponding to the lighter part in the Haar feature are classified into the pixel group Y (see Reference No. 2).

In Step S404, the intensities of the pixels belonging to the pixel group X are averaged and Px (mean intensity) is acquired. Also, the intensities of the pixels belonging to the pixel group Y are averaged and Py (mean intensity) is acquired.

In Step S405, it is determined whether Px > Py holds. When Px > Py holds, the process proceeds to Step S406. When Px ≦ Py holds, the process proceeds to Step S407.

In Step S406, "1" is assigned to the corresponding element of the descriptor. In Step S407, "0" is assigned to the corresponding element of the descriptor. In the example of FIG. 3, as mentioned above, only the sign of the characterized result is used as the element of the descriptor. That is, when the result of the subtraction calculation "Px - Py" has the plus sign (corresponding to YES in Step S405), "1" is assigned, and otherwise (corresponding to NO in Step S405), "0" is assigned. Thus, in this case, the descriptor has a total of 128 bits, the same as the number of the elements included in the descriptor.

As mentioned above, in the example of FIG. 1, the strips/patches are processed in the order of the numbers of the patches shown in FIG. 1, and the order of applying/using the Haar features for each patch is the same as the order of the 8 Haar features shown in FIG. 1, i.e., H1, H2, H3, H4, H5, H6, H7 and H8. Therefore, the 128 elements of the descriptor, acquired while the respective strips/patches are processed in sequence, are first arranged in the primary order of thus processing the strips/patches in sequence. After that, in Step S500 of normalizing, the order of these elements is changed according to the main orientation.

FIG. 4 illustrates another example of Step S400 shown in FIG. 2.

As shown in FIG. 4, in this example, steps S405-S407 in FIG. 3 are replaced by Steps S411 and S412.

In this example, in the same way as in the example of FIG. 3, for each of the Ns strips extracted in Step S200, Steps S401-S414 are executed.

In Step S401, for each of the Np patches included in the strip, Steps S402-S413 are executed.

In Step S402, using each of the Nh Haar patterns (Haar features), Steps S403, S404, S411 and S412 are executed.

Steps S403 and S404 are the same as those of FIG. 3 and duplicate description is omitted.

In Step S411, the subtraction calculation, Px - Py, is carried out. In Step S412, the subtraction result (in the form of a floating point value) is used as the corresponding element of the descriptor. Thus, in this example, the descriptor in the form of a floating vector, mentioned above, is acquired. The floating point value as the element of the descriptor can be coded in a given number of bits (8, 16, 32 or even more). Thus, in this case, the descriptor has 128 floating point values thus longer than 128 bits accordingly.

FIG. 5 illustrates one example of Step S500 shown in FIG. 2.

First, for each of the Ns strips extracted in Step S200, Step S501 is executed.

In Step S501, the intensities of the pixels belonging to the strip are added up. Thus, the respective sums are acquired for the Ns strips.

In Step S502, the elements belonging to one of the Ns strips having the maximum sum calculated in Step S501 are placed, in a strip unit, to the first place in the descriptor.

In Step S503, the elements belonging to another one of the Ns strips adjacent clockwise to the strip used in Step S502 are placed, in a strip unit, to the second place in the descriptor.

Then, the elements belonging to yet another one of the Ns strips adjacent clockwise to the strip previously used are placed, in a strip unit, to the next place in the descriptor.

This process is repeated until the elements belonging to all the Ns strips are thus processed (YES in Step S504).

Note that the order among the elements belonging to the same strip is kept unchanged even if the place of these elements is thus changed. In other words, the reordering the elements/bits in Step S500 is carried out in strip units.

FIG. 6 illustrates another example of Step S500.

As shown in FIG. 6, in the same manner, first, for each of the Ns strips extracted in Step S200, Step S511 is executed.

In Step S511, the variance of the intensities of the pixels belonging to the strip is calculated. Thus, the respective variances are acquired for the Ns strips.

In Step S512, the elements belonging to one of the Ns strips having the maximum variance calculated in Step S511 are placed, in a strip unit, to the first place in the descriptor.

In Step S513, the elements belonging to another one of the Ns strips adjacent clockwise to the strip used in Step S512 are placed, in a strip unit, to the second place in the descriptor.

Then, the elements belonging to yet another one of the Ns strips adjacent clockwise to the strip previously used are placed, in a strip unit, to the next place in the descriptor.

This process is repeated until the elements belonging to all the Ns strips are thus processed (YES in Step S514).

Note that the order among the elements belonging to the same strip is kept unchanged even if the place of these elements is thus changed. In other words, the reordering the elements/bits in Step S500 is carried out in strip units.

Next, a specific example of reordering (normalizing) in Step S500 will be described in case of the example of FIG. 1.

Here, it is assumed that the vertical strip including the "5", "6", "7" and "8" patches is determined as the strip corresponding to the maximum local (i.e., the maximum sum or the maximum variance) as a result of Step S501 or S511.

Then, reordering the elements of the descriptor in Steps S502-S504 or Steps S512-S514 will be carried out in the following manner.

The 32 (=4x8) elements belonging to the vertical strip including the "5", "6", "7" and "8" patches (each having the 8 elements corresponding to the 8 Haar features, respectively) are placed to the first place (Step S502 or S512).

Here, it is assumed that the direction of each strip is determined by the patch including the strip having the smallest number in the strip. As a result, in the respective four strips, the patches numbered "1", "5", "9" and "13" are used to determine their directions, respectively. Specifically, the strip including the "1" patch has the direction of 3 o'clock; the strip including the "5" patch has the direction of 0 o'clock; the strip including the "9" patch has the direction of 1 o'clock 30 minutes; and the strip including the "13" patch has the direction of 4 o'clock 30 minutes.

Then, in Step S503 or S513, the strip adjacent clockwise to the above-mentioned vertical strip having the "5" patch is the oblique strip having the "9" patch. Therefore, the 32 elements belonging to the oblique strip including the "9", "10", "11" and "12" patches (each having the 8 elements corresponding to the 8 Haar features) are placed to the second place.

Similarly, the strip adjacent clockwise to the above-mentioned oblique strip having the "9" patch is the horizontal strip having the "1" patch. Therefore, the 32 elements belonging to the oblique strip including the "1", "2", "3" and "4" patches (each having the 8 elements corresponding to the 8 Haar features) are placed to the third place.

Similarly, the strip adjacent clockwise to the above-mentioned horizontal strip having the "1" patch is the oblique strip having the "13" patch. Therefore, the 32 elements belonging to the oblique strip including the "13", "14", "15" and "16" patches (each having the 8 elements corresponding to the 8 Haar features) are placed to the fourth (last) place.

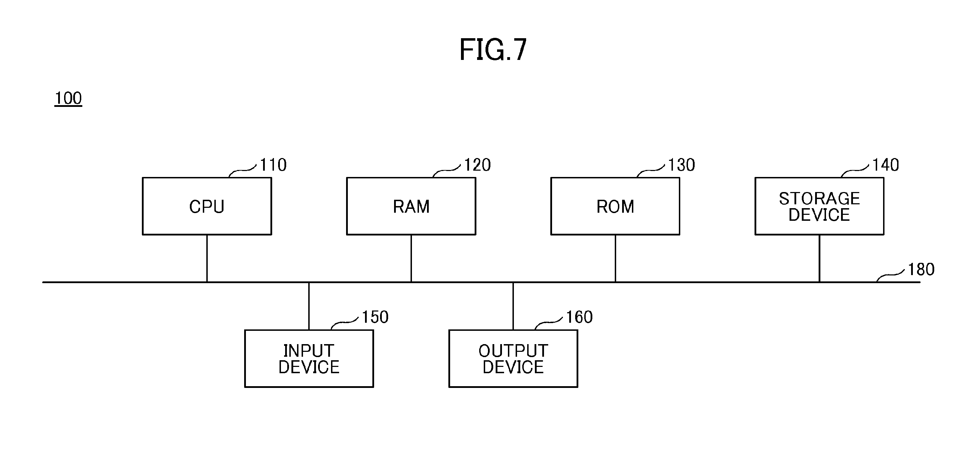

Next, using FIG. 7, a computer system 100 for implementing the method of generating a descriptor according to the present embodiment described above using FIGs. 1-6 will be described.

As shown in FIG. 7, the computer system 100 includes a Central Processing Unit (CPU) 110, a Random Access Memory (RAM) 120, a Read-Only Memory (ROM) 130, a storage device 140, an input device 150 and an output device 160 which are connected via a bus 180 in such a manner that they can carry out communication thereamong.

The CPU 110 controls the entirety of the computer system 100 by executing a program loaded in the RAM 120. The CPU 110 also performs various functions by executing a program(s) (or an application(s)) loaded in the RAM 120.

The RAM 120 stores various sorts of data and/or a program(s).

The ROM 130 also stores various sorts of data and/or a program(s).

The storage device 140, such as a hard disk drive, a SD card, a USB memory and/or the like, also stores various sorts of data and/or a program(s).

The input device 150 includes a keyboard, a mouse and/or the like for a user of the computer system 100 to input data and/or instructions to the computer system 100.

The output device 160 includes a display device or the like for showing information such as a processed result to the user of the computer system 100.

The computer system 100 executes the method of generating a descriptor according to the present embodiment described above, as a result of the CPU 110 executing instructions written in a program(s) loaded in the RAM 120, the program(s) being read out from the ROM 130 or the storage device 140 and thus loaded in the RAM 120.

According to an exemplary and non-limitative embodiment of the present disclosure, the computer system 100 includes a computer program stored in the memory, for example RAM 120 and/or ROM 130. The computer program includes instructions which, when executed by a processing device, in particular by the CPU 110, make the processing device carry out the method described with reference to FIG. 2-6. According to a variant, the computer program is stored externally to the computer system 100 on a non-transitory digital data support, e.g. on an external storage medium such as a HDD, a CD-ROM, a DVD, a read-only and/or a DVD drive and/or a DVD Read/Write drive, all known in the art. The computer system 100 thus includes an interface to read the computer program. Further, the computer system 100 could access one or more Universal Serial Bus (USB)-type storage devices (e.g., "memory sticks.") through corresponding USB ports (not shown).

Thus, the method of generating a descriptor, the apparatus for implementing this method and the computer system have been described in the specific embodiment and variant. However, embodiments and variants are not limited to the present embodiment and variant, and further variations, replacements and/or the like can be made.

## Claims

1. A method of generating a descriptor comprising the steps of:
determining, in an image, a circular region having a center at an interest point to be described (S100);
extracting strips extending in the circular region in mutually different directions and intersecting together at the interest point (S200);
dividing each of the strips into patches (S300);
characterizing each of the patches using Haar features to acquire elements of the descriptor corresponding to the respective Haar features (S400); and
arranging the elements of the descriptor according to the strip corresponding to a maximum local (S500).

2. The method as claimed in claim 1, wherein
the step of characterizing includes, for each of the patches, comparing mean intensities of pixels between two pixel groups, the pixels belonging to the two pixel groups being extracted from the patch according to each of the Haar features, to determine the elements of the descriptor corresponding to the respective Haar features.

3. The method as claimed in claim 2, wherein
the step of characterizing further includes, for each of the patches, determining, based on the comparing, which of the two pixel groups has the greater mean intensity, to determine the elements of the descriptor corresponding to the respective Haar features (S405).

4. The method as claimed in claim 2, wherein
the step of characterizing further includes, for each of the patches, calculating, based on the comparing, a difference between the respective mean intensities of the two pixel groups, to determine the elements of the descriptor corresponding to the respective Haar features.

5. The method as claimed in any one of claims 2-4, wherein
the mean intensities are calculated by employing an integral image technique.

6. The method as claimed in any one of claims 1-5, wherein
the step of arranging the elements of the descriptor includes:
determining one of the strips corresponding to a maximum local; and
arranging the elements of the descriptor according to the determined one of the strips.

7. The method as claimed in claim 6, wherein
the strip that corresponds to a maximum local is determined by determining which one of the strips has a maximum sum or variance of the intensities of the pixels included in the strip; and
the step of arranging the elements of the descriptor according to the determined one of the strips includes placing the elements belonging to the determined one of the strips at a first place and placing the remaining elements in strip units in a clockwise order of the strips.

8. The method as claimed in any one of claims 1-7, wherein
the step of extracting the strips includes extracting four strips,
the step of dividing each of the strips includes dividing each of the strips into four patches,
the step of characterizing each of the patches using Haar features includes characterizing each of the patches using eight of the Haar features, and
the descriptor has 128 of the elements.

9. Apparatus for generating a descriptor, the apparatus comprising:
a processor that is adapted to execute stored instructions; and
a memory that stores instructions, the memory storing
processor executable code that, when executed by the processor, is adapted to:
determine, in an image, a circular region having a center at an interest point to be described;
extract strips extending in the circular region in mutually different directions and intersecting together at the interest point;
divide each of the strips into patches;
characterize each of the patches using Haar features to acquire elements of the descriptor corresponding to the respective Haar features; and
arrange the elements of the descriptor according to the strip corresponding to a maximum local.

10. The apparatus as claimed in claim 9, wherein
the characterizing includes, for each of the patches, comparing mean intensities of pixels between two pixel groups, the pixels belonging to the two pixel groups being extracted from the patch according to each of the Haar features, to determine the elements of the descriptor corresponding to the respective Haar features.

11. The apparatus as claimed in claim 10, wherein
the characterizing further includes, for each of the patches, determining, based on the comparing, which of the two pixel groups has the greater mean intensity, to determine the elements of the descriptor corresponding to the respective Haar features.

12. The apparatus as claimed in claim 10, wherein
the characterizing further includes, for each of the patches, calculating, based on the comparing, a difference between the respective mean intensities of the two pixel groups, to determine the elements of the descriptor corresponding to the respective Haar features.

13. The computer system as claimed in any one of claims 9-15, wherein
the extracting the strips includes extracting four strips,
the dividing each of the strips includes dividing each of the strips into four patches,
the characterizing each of the patches using Haar features includes characterizing each of the patches using eight of the Haar features, and
the descriptor has 128 of the elements.

14. Computer program product downloadable from a communication network and/or recorded on a medium readable by computer and/or executable by a processor, comprising program code instructions for implementing a method according to at least one of claims 1 to 8.

15. Non-transitory computer-readable medium comprising a computer program product recorded thereon and capable of being run by a processor, including program code instructions for implementing a method according to at least one of claims 1 to 8.
